# EUROPEAN PATENT APPLICATION

(11) **EP 1 182 614 A2**
(43) Date of publication of application: **27.02.2002**
(21) Application number: 01710046.2
(22) Date of filing: 22.08.2001
(51) Int. Cl.: G06T 11/00

(54) **System and method for applying a decorative element to a window covering**

(30) Priority: 22.08.2000 US 226847
(71) Applicant: Newell Window Furnishings, Inc., Freeport, Illinois 61032-0943 (US)
(72) Inventor: Palmer, Roger C., Greensboro, NC 27410 (US); Navarro, Jose A., High Point, NC 27265 (US); Morris, Kenneth R., Cornelius, North Carolina 28031 (US)
(74) Representative: UEXKÜLL & STOLBERG

(57) **Abstract**

A method of providing a decorative element to a window covering is disclosed. The method includes obtaining decorative element data from a user, and applying the decorative element to the window covering in a retail store. A system for providing a decorative element to a window covering in a retail location is also disclosed. The system includes a computer configured to store and recall a decorative element data file, and a printer coupled to the computer and configured to apply the selected decorative element to the window covering.

## Description

### FIELD OF THE INVENTION

The present invention relates to a system and method for ' customizing window coverings. More particularly, the present invention relates to a system and method for applying a decorative element to a window covering. Even more particularly, the present invention relates to a system and method for applying a decorative element to a window covering in a retail or installation location.

### CROSS-REFERENCE TO RELATED APPLICATIONS

The present invention claims prior under 35 U.S.C. § 119 from U.S. Provisional Patent Application No. 60/226, 847 titled "METHOD AND APPARATUS FOR IN-STORE IMAGING OF WINDOW COVERINGS" filed 08/22/00 (Attorney Docket No. 77056-322), the full disclosure of which is hereby incorporated by reference.

### BACKGROUND OF THE INVENTION

Window coverings with decorative treatments or coverings are generally known. Such decorative treatments or coverings are typically decorative inserts, strips, film, or sleeves that are attached (e.g., with an adhesive) or fit over a window covering slat or panel. Other such known decorative window coverings are typically "decorated" by the manufacturer of the window covering with, for example, a silk screening or similar operation.

However, such known decorative treatments or coverings are applied when the window covering is manufactured―before retailers or installers receive them. As such, known decorative treatments or coverings have several disadvantages including: inability to accommodate a customer's personal preference for colors, patterns, images, textures, and the like; inability to receive customized inputs or modifications from the customer (including scanning, matching, and/or editing of colors, images, pattems, textures, and the like); inability to customize window coverings in a retail or installation location; inability to work with other in-store customizations to window coverings.

Accordingly, it would be advantageous to provide an inexpensive, reliable, and widely adaptable system and method for applying decorative elements to window coverings (that avoids the above-referenced and other problems) would represent a significant advance in the art. It would also be advantageous to provide a system that accommodates a customer's personal preference for colors, patterns, images, textures, and the like. It would further be advantageous to provide a system that receives customized inputs from the customer, including scanning, matching, and/or editing of colors, images, patterns, textures, and the like. It would further be advantageous to provide a system that customizes window coverings in a retail or installation location. It would further be advantageous to provide a system capable of working with other window covering "in-store" customizations systems (e.g., size in-store customization, or the like). It would be desirable to provide for a system and method for applying a decorative element to a window covering having one or more of these or other advantageous features.

### SUMMARY

The present invention relates to a method of providing a decorative element to a window covering, the method including the steps of obtaining decorative element data from a user, and applying the decorative element to the window covering in a retail store or an installation site.

The present invention also relates to a method for applying decorative elements to a window covering, the method including the steps of storing a searchable data compilation of decorative elements on a storage device of a computer, displaying available decorative elements to a user on a monitor in communication with the computer, obtaining a selection from the user, the selection comprising at least one of the decorative elements contained in the data compilation, displaying on the monitor images of the decorative elements applied to the window covering, and applying the decorative elements to the window covering.

The present invention further relates to a system for providing a decorative element to a window covering in a retail location, the system including a computer configured to store and recall a decorative element data file, and a printer coupled to the computer and configured to apply the selected decorative element to the window covering.

The present invention further relates to a system for customizing a window covering, the system including a memory storage device configured to store and recall decorative element data files and textual information coordinated with the decorative element data files, a display configured to display the decorative element data files in response to actions of a user to recreate a representative image of the decorative element sample, an input device for accepting choices from the user, a processor configured to implement data manipulation and operate the display, input device and storage device, rendering program for rendering decorative elements chosen by the user, and a printer configured to apply the selected decorative element to the window covering.

The present invention further relates to various features and combinations of features shown and described in the disclosed embodiments. Other ways in which the objects and features of the present invention are accomplished will be described in the following specification or will become apparent to those skilled in the art after they have read this specification. Such other ways are deemed to fall within the scope of the present invention if they fall within the scope of the claims which follow.

### DESCRIPTION OF THE FIGURES

The invention will become more fully understood from the following detailed description, taken in conjunction with the accompanying drawings, wherein like reference numerals refer to like elements, in which:
FIGURE 1 is a schematic block diagram of a system for in-store imaging of window coverings according to a preferred embodiment;
FIGURE 2 is a schematic block diagram of sources of color selection according to an exemplary embodiment;
FIGURE 3 is a schematic block diagram of sources of pattern or texture selection according to an exemplary embodiment;
FIGURE 4 is a schematic block diagram of sources of image selection according to an exemplary embodiment;
FIGURE 5 is a schematic flow diagram of a method of in-store imaging of window coverings according to a preferred embodiment;
FIGURE 6 is a schematic flow diagram of a method of customizing a window covering according to an exemplary embodiment;
FIGURE 7 is a schematic block diagram of the software and programs for the system of FIGURE 1 according to an exemplary embodiment.

### DETAILED DESCRIPTION OF PREFERRED AND OTHER EXEMPLARY EMBODIMENTS

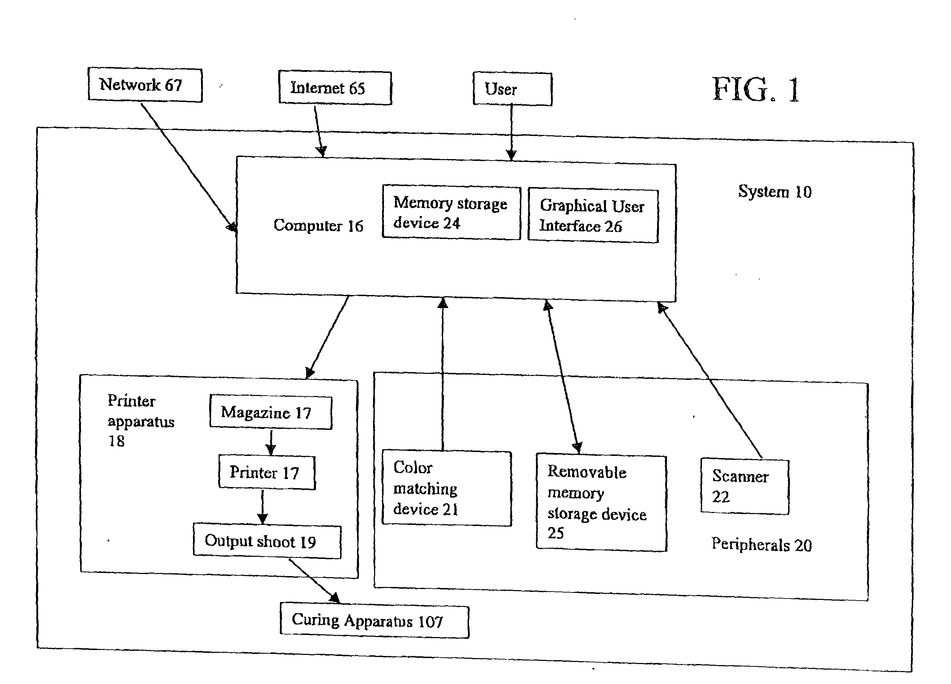

FIGURE 1 shows a system 10 for customization of any of a variety of window coverings 12 (e.g., a head-rail and vane package) at locations where window covings are sold (e.g., window covering stores, department stores, and "home improvement"), or installed.

Customization of window coverings relates to applying or providing a desired decorative element 14 to window covering 12. Customization by system 10 provides several advantages over conventional methods, including the ability to precisely match customers' desired color choice in the store (so that leave the store with a color custom blind); reduce in-store inventory (as opposed to manufacturing and stocking vanes having a variety of colors, sizes, prints, etc.); and the ability to customize pattems in the store.

Window coverings 12 include horizontal blinds having horizontal vanes, vertical blinds having vertical vanes, roller shades, etc., which may be sold as kits according to a specified dimension, or sold to be sized in the store using any of a variety of conventionally known techniques. The portion of the window covering 12 to be customized may have any of a variety of base colors (e.g., white, off-white, etc.), may be any of a variety of shapes and sizes, and may be made from any of a variety of materials (e,g., polyvinyl chloride (pvc), etc.).

System 10 includes a computer 16, a printer apparatus 18, and one or more peripherals 20 (e.g., color-matching device 21, scanner 22, etc.). Computer 16 includes a central processing unit (CPU), a memory storage device 24 (e.g., hard disc drive or the like), a removable memory storage device 25 (e.g., CD ROM, floppy disk, etc.), and a graphical user interface (GUI) 26 which is configured to provide an interface between the user and computer 16. Items can be selected - and activated by pointing at graphical representations (e.g., "icons") on a display screen by any of a variety of input devices such as a mouse, touch screen, etc,

Printer apparatus 18 is coupled to computer 16 and is configured to apply decorative element 14 to window covering 12, Printer apparatus 18 includes a printer 15, a reservoir or magazine 17, and an output shoot 19, Printer 15 may be any of a variety of devices (e.g., ink-jet printers, laser printers, etc.) configured to apply an ink, color, or other material to a planar or curved surface. Magazine 17 is configured to contain a plurality of window covering vanes (or other window covering elements) that are to receive decorative element 14. According to an exemplary embodiment, magazine 17 is mounted vertically and contains one or more window covering 12 base colors of eighty-four inch vanes. The vanes are fed through print head(s) of printer 15 to an output shoot 19, ready for bundling and protective film. According to an alternative embodiment, printer apparatus 18 does not include magazine 17; instead, the window covering element (that is to receive decorative element 14) is supplied one at a time (e.g., manually).

Decorative element 14 includes any of a variety of images 28, colors 30 and/or indicia 32 that can be applied to window coverings 12 and alter the appearance of window coverings 12. For example, images 28 may include objects, scenery or landscape view, people, text, sailboat, company logo, advertisement, "museum art" or other images sold under a license (e.g., Monet's London Bridge, one of Tumer's seascapes, or other paintings), children's characters, etc. Indicia 32 may include lines, geometric configurations, patterns, lines configured to provide the appearance of texture, deposited material to provide texture, etc.

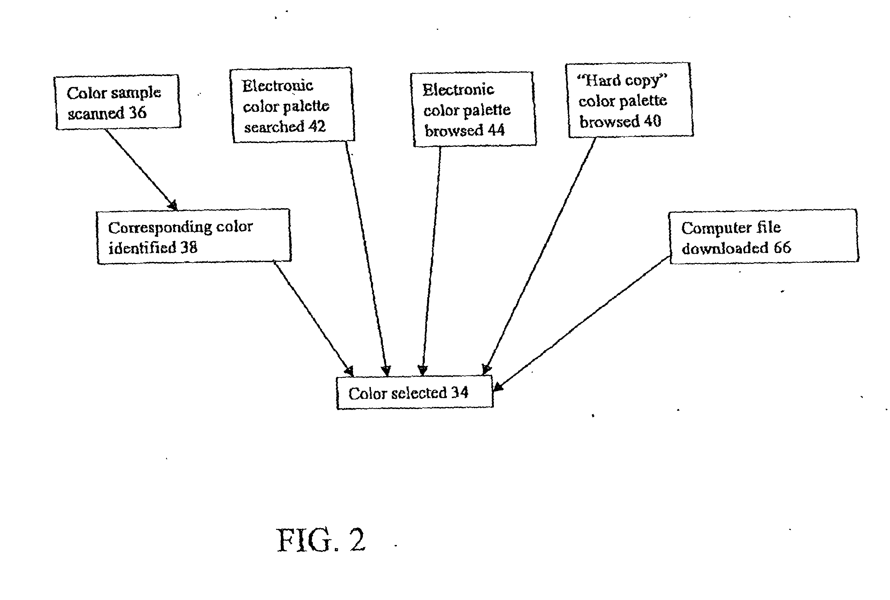

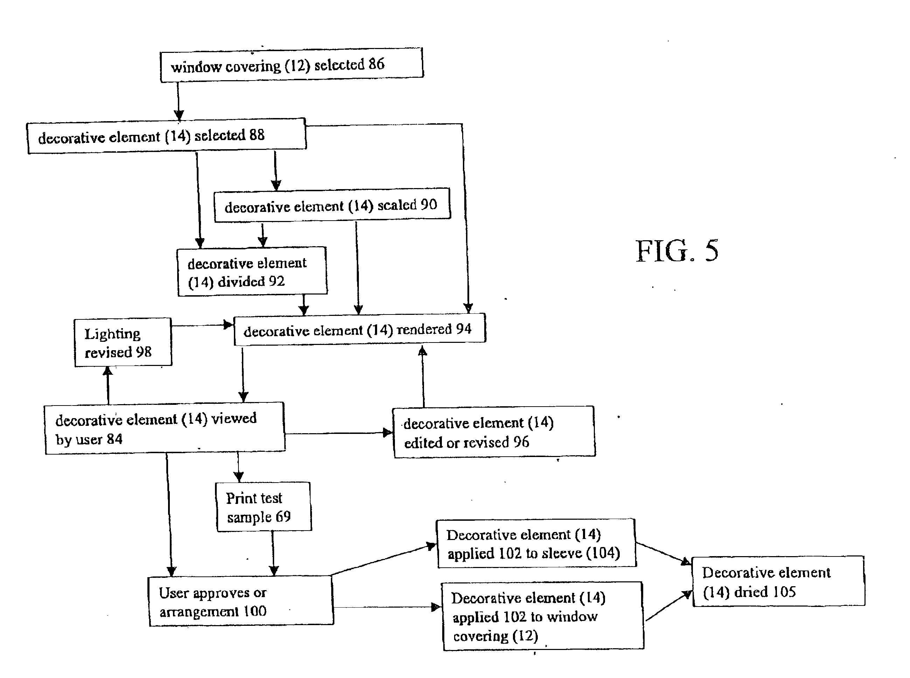

As shown in FIGURE 5, decorative element 14 is selected and arranged by the customer by any of a variety of methods and operations. According to an exemplary embodiment shown in FIGURE 2, a color is selected (step 34) by a customer or a retail store employee performing a color match to an object (e.g., fabric swatch, wallpaper sample, paint chip, etc.) brought into the store by the customer. Preferably the color match is done by electronically scanning (step 36) (e.g., spectrophotometrically measure) the sample with a scanner configured to identify (step 38) a corresponding color (similar to custom mixing of paints).

Altematively, also shown in FIGURE 2, a color is selected (step 34) by a manual review of or comparison a sample to a palette of colors stored in physical form (i.e., reference cards, books, etc.) (step 40) or stored in electronic form (which is preferably capable of being searched (step 42) or browsed (step 44) by a color selection program). Such physical or electronic color palettes may be provided by manufacturers such as Sherwin-Williams™, Glidden™, Ralph Loren™ Paints, and others.

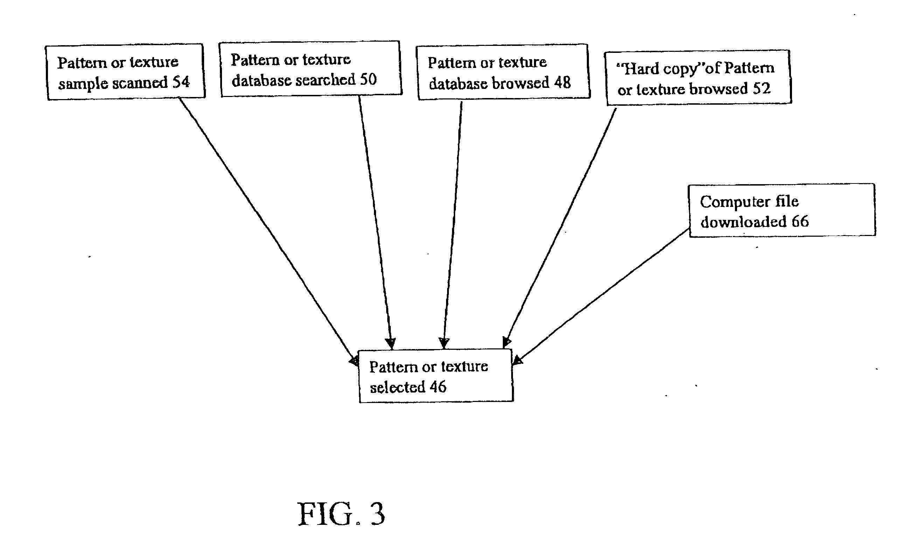

According to another exemplary embodiment shown in FIGURE 3, a pattern or texture is selected (step 46) from browsing (step 48) or searching (step 50) a database of pre-programmed patterns (e.g., provided by Waverly, Laura Ashley, fabric designs from furniture companies, wood patterns, etc.); browsing (step 52) a hard copy of patterns or textures; scanning (step 54) in from a sample; etc.

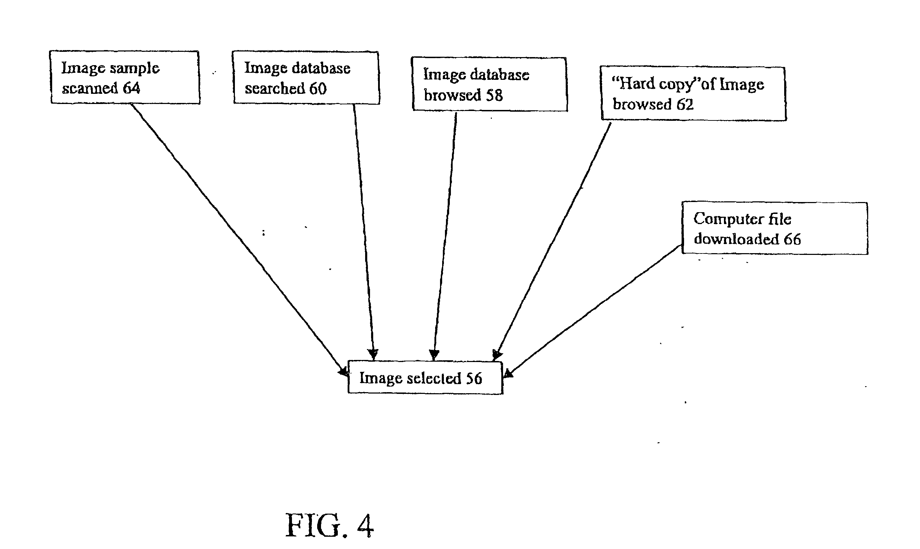

According to another exemplary embodiment as shown in FIGURE 4, an image is selected (step 56) from browsing (step 58) or searching (step 60) a database of stored images (e.g., museum art, cartoon characters, etc.); browsing (step 62) a "hard copy" (e.g., booklet, brochure, etc,) of images; scanning (step 64) an image provided by the customer; etc.

According to alternative embodiments decorative elements are provided or "downloaded" (step 66) by the customers in any of a variety of electronic formats (e.g., a computer file saved on a disk) using any of a variety of compression techniques such as JPEG (Joint Photographic Expert Group), TIFF, etc.) that are read by computer 16 and otherwise manipulated by system 10. Decorative element files may also be accessed from the internet 65 or a network 67.

After being scanned (step 36 or step 64), decorative element 14 is viewed by the customer and corrected (e.g., electronically or automatically) and/or manually corrected if needed using an editor program. According to an exemplary embodiment, decorative element 14 can be modified or edited (e.g., cropped, resized relative to the window covering, rotated, balanced, sharpened, softened, "negatived," despeckled, pasteurized, edged, and the like) by the customer. A test strip or sample can be printed (step 69) on paper or window covering samples for customer review using the attached equipment,

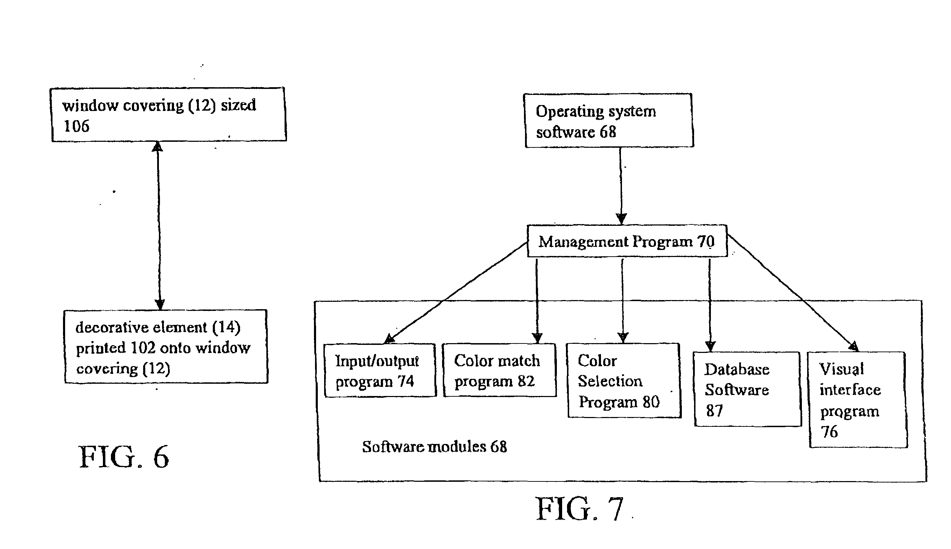

Many of these functions are carried out by operating system software 68 (for example, Microsoft™ Windows/DOS operating system, Macintosh™ operating system, or the like). As shown in FIGURE 7, system 10 includes a number of software modules 70 which are coordinated and overfaid by a management program 72. Management program 72 is responsible for interaction with the user and interaction between system 10 components (i.e., CPU, scanners, printers, hard disc drives, and CD-ROM drives) and other software routines or programs.

FIGURE 7 shows the major functional grouping of several possible software program modules 70, Management program 72 mediates between most of the other programs and is linked to the computer system's hardware through operating system 68. Management program 72 comprises several interrelated software modules 70, including an input/output program 74, a visual interface program 76, and a help program 78. A color selection program 80 controls the specialized color selection ability of system 10. When the user wishes to manually select (e.g., by comparing a color to a sample brought into the store) a color palette of colors is presented so that a preferred color or color range can be chosen (the range of colors being limited only by the limitations of the software and/or printer). A color match program 82 searches the database for "corresponding" colors that match or fall close to the scanned color (step 36), or searched color (step 42). When decorative elements 14 are saved in a database so that it may be accessed by the customer, database 87 software is used (for example) to search (step 42, step 50, step 60), "browse" (e.g., keyword searched), (step 44, step 48, step 58), and the like, files, and select the desired decorative element.

The database contains any of a variety of color identifiers (e.g., red-green-blue (RGB) color values) for a wide variety of colors. When color samples provided by the customer is scanned (step 36) or a color is otherwise selected (step 34), the measured RGB colors may be displayed (step 84) alongside the RGB color value of the corresponding color so that the user can appreciate any slight deviation,

Customer also selects window coverings 12 from a database of window coverings which is stored on memory storage device 24 or an external memory device 25, or is accessed though Internet 65 or network 67. Each window covering image is prepared for rendering by, for example, constructing a "wire frame" model that indicates the orientation of each surface on the window covering image for correct rendering of the image and color. Once window covering 12 decorative element 14 is selected (step 86 and step 88), computer 16 scales (step 90), divides (step 92), and renders (step 94) decorative element 14 so that the customer may view (step 84) a computer image of window covering 12 (with decorative element 14 applied to it) and make any adjustments or revisions (step 96) necessary. The rendered window covering can be rotated so it can be viewed (step 84) from a variety of angles. Scaling (step 90) decorative element 14 allows the customer to distribute one or more decorative elements 14 across window covering 12. The one or more decorative elements 14 can be positioned and repeated systematically or randomly about window covering 12. When decorative element 14 is split between two or more portions of window covering 12 (e.g., across a plurality of vanes), computer 16 "cuts" or divides (step 92) decorative element 14 and assigns each portion to specific vanes so that a continuous decorative element 14 is apparent when window covering 12 is closed or open. The selected decorative element 14 is rendered (step 94) onto the selected window covering 12 to show the decorative element 14 installed or applied to window covering 12 with correct perspective and shading. The "room lighting" in the rendered image may be altered (step 98) (e.g., from daylight to evening) to see how the rendered window covering appears at different times of the day. Scaling (step 90), coloring, image dividing (step 92), and other aspects of image or color organization can be quickly reoriented or revised (step 96) as the customer desires using the software. Once the window covering arrangement is finalized and approved (step 100) by the customer, decorative element 14 is applied (step 102) to window covering 12 (e.g., vanes) in the store.

The customization of the window covering 12 is provided by applying decorative elements 14 (e.g., images, colors and/or indicia) to window covering 12 with printer 15. According to an exemplary embodiment, printer 15 includes a series of printer heads (e.g., ink-jet printer heads) arranged over the window covering element (e.g. vane). Alternatively, printer 15 includes a single printer head (e.g., ink-jet printer head) which is moved about the vane. According to a preferred embodiment, when the printer head(s) are configured to print directly on the vane, the vane has a roughed surface or surface treatment to aid ink adhesion. Alternatively, printer 15 is configured to print onto a polyester film or sleeve 104 which is then coupled (e.g., adhered, etc.) to window covering 12 using a cold laminating process, a hot melting process, a heat shrink process, etc. Alternatively, the pattern or texture is applied to window covering 12 by printing two-dimensional indicia to give an appearance of texture, or printer 15 may be configured to add or deposit material (e.g., fast-drying epoxy, polypropylene, etc.) to window covering 12 to provide a three-dimensional texture,

After decorative element 14 is applied (step 102) to window covering 12, the ink, color, or other applied material is allowed to dry (step 105). According to an exemplary embodiment, an apparatus 107 (e.g., a curing or drying apparatus) such as a "hot air" blower, ultraviolet light, or the like is used to dry (or speed up the time required to dry or "set") the ink, the color, or the applied material. Alternatively, the decorative element is allowed to "air dry." It is intended that the customer can leave the store after an hour (preferably less than twenty minutes) with his or her customized window covering 12.

After decorative element 14 is applied (step 102) to window covering 12, window covering 12 is sized (step 106) to the exact dimensions desired by the customer, side route holes added, etc. Alternatively, window covering 12 is sized before decorative element 14 is applied (step 102). It is expected that the customer can select (step 86, step 88), print (step 102), and size (step 106) window covering 12 without having to leave the store and return at a later time.

it is important to note that the use of the term "window covering" is not meant as a term of limitation, insofar as any "blind," "shade" or like apparatus having a decorative or functional use or application is intended to be within the scope of the term, The use of the term "window covering" is intended as a convenient reference for any such "blirid" or structure, which may also be viewed synonymously with the term "window furnishing" or other like terms. It is also important to note that application of a decorative element or the use of the term "imaging" or "printing" is meant to cover any modification to the appearance of the window covering, including but not limited to application of color or colors, images, patterns, graphics, texture, etc. It is further important to note that the description of using a "printer" to apply or provide the "decorative element" or "image" is not limited to a particular device, but is meant to cover any apparatus or device that may be configured to operate in the system described herein. It is further important to note that the terms "window covering," "in-store," and "decorative element" *are* intended to be broad terms and not terms of limitation. These components may be used with any of a variety of products or arrangements and are not intended to be limited to use with a particular style of window covering or customization application.

It is also important to note that the examples and particular formulations, and construction and arrangement of the elements of the method and apparatus for in-store imaging of window coverings as shown in the preferred and other exemplary embodiments are illustrative only. Although only a few embodiments of the present invention have been described in detail in this disclosure, those skilled in the art who review this disclosure will readily appreciate that many modifications are possible (e.g., variations in sizes, dimensions, structures, shapes and proportions of the various elements, values of parameters, mounting arrangements, materials, colors, orientations, etc.) without materially departing from the novel teachings and advantages of the subject matter recited in the claims. Accordingly, all such modifications are intended to be included within the scope of the present invention as defined in the appended claims. The order or sequence of any process or method steps may be varied or re-sequenced according to alternative embodiments. In the claims, any means-plus-function clause is intended to cover the structures described herein as performing the recited function and not only structural equivalents but also equivalent structures. Other substitutions, modifications, changes and/or omissions may be made in the design, operating conditions and arrangement of the preferred and other exemplary embodiments without departing from the spirit of the present invention as expressed in the appended claims.

## Claims

1. A method of applying a decorative element to a window covering, the method comprising the steps of:
providing decorative element data;
applying the decorative element according to the decorative element data to the window covering in a retail store.

2. The method of Claim 1 wherein the decorative element is one of a color, image, pattem, and texture.

3. The method of Claim 1 wherein the step of providing decorative element data includes selecting the decorative element form a database.

4. The method of Claim 1 wherein the step of providing decorative element data includes scanning a sample provided by a customer.

5. The method of Claim 1 wherein the step of providing decorative element data includes reading an electronic file provided by the user.

6. The method of Claim 1, further including the step of displaying the decorative element applied to the window covering on a monitor.

7. The method of Claim 1 wherein the step of applying the decorative element includes printing the decorative element onto a portion of the window covering.

8. A method for applying a decorative element to a window covering, the method comprising the steps of:
providing a searchable data compilation of decorative elements on a storage device;
displaying available decorative elements to a customer;
obtaining a selection from the user, the selection comprising at least one of the decorative elements contained in the data compilation;
displaying images of the selected decorative element applied to the window covering;
applying the selected decorative element to the window covering.

9. The method of Claim 8 wherein the selected decorative element is one of a color, an image, a pattern, and a texture.

10. The method of Claim 8 wherein the selected decorative element is applied to the window covering in a retail store.

11. The method of Claim 8, further including the step of scanning a sample.

12. The method of Claim 8, further including the step of accessing a file containing the searchable data compilation.

13. The method of Claim 8, further comprising the step of storing the searchable data compilation on a removable storage medium.

14. The method of Claim 13 wherein the removable storage medium is a CD-ROM.

15. The method of Claim 8 wherein the step of displaying images includes rendering at least one decorative material onto a computer model of the window covering.

16. A system for applying a decorative element to a window covering in a retail location, the system comprising:
a computer device configured to store and recall a decorative element data;
a printer coupled to the computer and configured to apply the selected decorative element to the window covering.

17. The system of Claim 16 further including a scanner configured to spectrophotometrically measure a color sample.

18. The system of Claim 16 further comprising:
window covering data to display images of the decorative element applied to the window covering;
means for user selection of a window covering sample;
program for mapping a selected decorative element onto appropriate portions of the image of the selected window covering sample whereby the user can appreciate how the selected decorative element might look on the window covering.

19. The system of Claim 16 wherein the computer is coupled to a network or an Internet server so that decorative element data from a remote location is searchable or recallable.

20. The system of Claim 16 further including a magazine configured to feed window covering elements to the printer.

21. The system of Claim 16 further including a curing apparatus configured to cure the decorative element.

22. The system of Claim 16 wherein the decorative element is one of a color, pattem, image, and texture.

23. A system for customizing a window covering, the system comprising:
a memory storage device configured to store and recall decorative element data files and textual information coordinated with the decorative element data files;
a display configured to display the decorative element data files in response to actions of a user to recreate a representative image of the decorative element sample;
an input device for accepting choices from the user;
a processor configured to implement data manipulation and operate the display, input device, and storage device;
rendering program for rendering decorative elements chosen by the user;
a printer configured to apply the selected decorative element to the window covering.

24. The system of Claim 23, wherein the decorative element is one of a color, image, pattern, and texture.

25. The system of Claim 23 further including a scanner configured to spectrophotometrically measure a color sample.

26. The system of Claim 25, wherein each color contains RGB values corresponding to the actual spectrophotometrically measured sample.

27. The system of Claim 23 further comprising:
window covering data to display images of the decorative element applied to the window covering on a monitor;
program for mapping a selected decorative element onto appropriate portions of the image of the selected window covering sample whereby the user can appreciate how the selected decorative element might look on the window covering.
